Europäisches Patentamt

(19) European Patent Office

Office européen des brevets

(11) Veröffentlichungsnummer: **0 111 729**
**B1**

(12) **EUROPÄISCHE PATENTSCHRIFT**

(45) Veröffentlichungstag der Patentschrift:
16.09.87

(51) Int. Cl.⁴: **H 02 M 3/155**, H 04 B 3/44

(21) Anmeldenummer: **83111188.5**

(22) Anmeldetag: **09.11.83**

(54) Schaltungsanordnung zur Speisung von elektrischen Verbrauchern mit einer Gleichspannung.

(30) Priorität: **12.11.82 DE 3242023**

(43) Veröffentlichungstag der Anmeldung:
**27.06.84 Patentblatt 84/26**

(45) Bekanntmachung des Hinweises auf die Patenterteilung:
**16.09.87 Patentblatt 87/38**

(84) Benannte Vertragsstaaten:
**AT BE CH DE FR GB IT LI NL SE**

(56) Entgegenhaltungen:
**DE - B - 1 254 202**
**DE - B - 1 947 901**
**FR - A - 2 485 288**
**GB - A - 1 251 114**

**ELEKTRONIKPRAXIS, Band 10, Nr. 6, Juni 1975**
**"Geschaltete Stromversorgungen - Beispiele und**
**Prinzip", Seiten 16, 18, 20**
**ELEKTROTECHNIK, Band 60, Nr. 9, Mai 1978 H. CHRIST**
**et al. "Der Schaltregler in der Praxis", Seiten 14-20**

(73) Patentinhaber: **Siemens Aktiengesellschaft Berlin und**
**München, Wittelsbacherplatz 2, D-8000 München 2 (DE)**

(72) Erfinder: **Musil, Gerhard, Dipl.-Ing.,**
**Ludwig-Braille-Strasse 8, D-8000 München 70 (DE)**

# Beschreibung

Bei elektrischen Systemen mit in Kette geschalteten Verbrauchern ist es oft vorteilhaft, diese über eine gemeinsame Leitung mit konstantem Strom zu versorgen. Solche Fernspeiseeinrichtungen werden bei Weitverkehrseinrichtungen häufig angewandt. Die einzelnen Leitungsverstärker bzw. Regeneratoren werden von einer oder zwei speisenden Endstellen aus gespeist und liegen als Verbraucher in Serie. Da sie sich im normalen Betriebsfall als fast konstante ohmsche Last verhalten, stellt sich auch am Gesamtsystem eine bestimmte, weitgehend konstante Spannung ein.

Die meisten elektronischen Geräte sind am besten mit konstanter Spannung zu betreiben und haben dann eine zugeordnete Stromaufnahme, die oft noch lastabhängig ist. Um eine Stromspeisung zu ermöglichen, muss das gespeiste Gerät so dimensioniert werden, dass sich die gewünschte Betriebsspannung bei dem dann vorgegebenen Strom einstellt. Unter Umständen wird es für einen kleineren Strom dimensioniert und der dann überschüssige Strom z.B. über eine parallelgeschaltete Z-Diode abgeleitet.

Die Dimensionierung der Verbraucher wird insbesondere dann schwierig, wenn sie stark wechselnden Belastungen unterworfen sind, wenn es möglich sein soll, dass Geräte mit unterschiedlichem Leistungsbedarf betrieben werden können und/oder mehrere Geräte in unterschiedlichen Anordnungen parallel zu schalten sind. Es ist dann zweckmässig, den eigentlichen Verbrauchern Umrichter vorzuschalten, die aus konstantem Strom eine konstante Spannung erzeugen und je nach Stromaufnahme dann ihrerseits mit unterschiedlicher Eingangsspannung arbeiten.

Eine Schaltungsanordnung mit einem Speisegerät, das in einem unteren Teilbereich der Ausgangsleistung mit einem Schaltregler arbeitet, ist in der DE-AS 1 947 901 beschrieben.

Das bekannte Speisegerät liegt eingangsseitig in einem Speisekreis, der einen eingeprägten Strom führt und enthält sowohl einen Schaltregler mit einem steuerbaren Schaltglied als auch einen Verlustregler. Das steuerbare Schaltglied des Schaltreglers liegt über eine Längsdrossel parallel zum Eingang des Speisegerätes. Parallel um Schaltglied liegt die Reihenschaltung einer iode, die bei leitendem Schaltglied gesperrt ist nd ein Kondensator, über dessen Dimensionieng in der genannten Druckschrift keine Angan gemacht sind. Das Schaltglied ist mittels er Steuerschaltung in Abhängigkeit von einer stant zu haltenden Spannung in seiner relati- Einschaltdauer steuerbar. Ausserdem ist Schaltregler ein Umrichter vorgeschaltet, en Eingang in einem einen eingeprägten n führenden Speisekreis liegt.

- bekannten Schaltungsanordnung liegt die be zugrunde, die Spannung am Verbrau- n Nennbetrieb und bei grossen Lastände- , insbesondere bei Ausfall von Teilen des uchers konstant zu halten. Dabei sollen sowohl gute dynamische Eigenschaften als auch ein guter Wirkungsgrad erzielt werden.

Die bekannte Schaltungsanordnung geht davon aus, dass bei grossen Laständerungen weder das Schaltregler- noch das Verlustreglerprinzip für sich allein ohne erhebliche Nachteile anwendbar ist. Das Speisegerät ist daher so beschaffen, dass sich der Regelvorgang in Abhängigkeit vom vorliegenden Betriebsfall jeweils auf das günstigere Regelprinzip bzw. auf eine Kombination beider Regelprinzipien einstellt. Bei Normalbetrieb wird die Ausgangsspannung mit Hilfe eines Verlustreglers konstant gehalten. Der Schaltregler ist nur unterhalb eines vorgegebenen Belastungsstromes wirksam.

Im Hinblick auf die gewünschten dynamischen Eigenschaften liegt der Arbeitspunkt im Nennbetrieb in dem Regelbereich des Verlustreglers. Dies kann jedoch bei grösseren Regelbereichen zu einer unzulässig grossen Verlustleistung führen.

Da bei der bekannten Schaltungsanordnung der Eingang des Umrichters mit einem Konstantstrom gespeist wird, stellen sich je nach aufgenommener Leistung unterschiedliche Eingangsspannungen ein. Der Umrichter ist daher stark schwankenden Eingangsspannungen unterworfen. Die unter diesen Betriebsbedingungen vergleichsweise schlechte Dynamik kann dadurch in Kauf genommen werden, dass der Verlustregler die geforderten dynamischen Eigenschaften der Schaltungsanordnung gewährleistet.

Weiterhin ist aus der Siemens-Zeitschrift 48 (1974), Beiheft «Nachrichten-Übertragungstechnik», S. 130 eine Fernspeiseeinrichtung bekannt, bei der sich die Übersetzung von Transformatoren eines Gleichstromumrichters so einstellen lässt, dass der Spannungsabfall am Lastwiderstand einen vorgegebenen Wert hat. Dabei ist der Gleichstromumrichter je nach Einsatzfall auf eine entsprechende Stromübersetzung einzustellen. Als Spannungsregler dient ein Verlustregler.

Man kann die Stromübersetzung mit Hilfe einer Umschalteeinrichtung selbsttätig in Stufen auf den jeweils günstigsten Wert einstellen. Dies ist jedoch mit einem zusätzlichen Aufwand verbunden.

Die allgemein eingeführten Umrichterprinzipien gehen davon aus, dass Umrichter mit wenigstens annähernd konstanter Spannung betrieben werden. Sie haben im allgemeinen mehrere Nachteile, wenn sie mit eingeprägtem Strom betrieben werden, aber bei wechselnder Belastung einen konstante Spannung abgeben sollen.

Beim Einschalten beginnen die Umrichter bei einer Spannung zu arbeiten, die kleiner sein muss als die im eingeschwungenen Zustand niedrigste zu erwartende Eingangsspannung. Ohne zusätzliche Massnahmen versuchen übliche Umrichter sofort am Ausgang die Nennspannung zu erzeugen, wobei zusätzlich die internen Speicher- und Filterkondensatoren geladen werden. Dadurch ist beim Einschalten die Stromaufnahme besonders hoch. Wird diese aber begrenzt, was bei Einprägung eines Stromes, u.a. der Fall ist, so bricht die Spannung am Eingang wieder zusammen. Die Umrichter lassen sich nicht einschalten.

Ferner könnte bei stark schwankenden Lasten ebenfalls der Fall eintreten, dass die Spannung am Eingang wegen der Strombegrenzung zusammenbricht. Dies lässt sich nur durch zusätzliche Massnahmen vermeiden, z.B. durch eine Überdimensionierung der Umrichter in Bezug auf die Nennleistung.

Die beiden beschriebenen Fälle lassen sich entsprechend der DE-AS 1 947 901 durch eine Regelung beherrschen, die aber verhältnismässig aufwendig ist und ausserdem die Eigenschaft hat, dass schnelle Lastschwankungen über einen Verlustregler abgefangen werden und relativ langsam die Betriebsweise so geändert wird, dass der Umrichter mit der dann entsprechend angepassten Spannung am Eingang betrieben wird.

Aufgabe der Erfindung ist es, eine Schaltungsanordnung zur Speisung von wenigstens einem Verbraucher, die an ihrem Ausgang bzw. an ihren Ausgängen dem eigentlichen Verbraucher bzw. mehreren Verbrauchern eine oder mehrere konstante Spannungen bietet, derart auszubilden, dass sie es bei möglichst einfachem Aufbau gestattet, dass die Stromaufnahme dieser Verbraucher innerhalb kurzer Zeit stark schwanken kann. Insbesondere soll selbst bei grossen Belastungsschwankungen ein hoher Wirkungsgrad bei einfachem Aufbau erreicht und somit eine hohe Betriebssicherheit gewährleistet werden.

Gemäss der Erfindung wird die Schaltungsanordnung zur Lösung dieser Aufgabe in der in Anspruch 1 angegebenen Weise ausgebildet.

Dabei können gegebenenfalls mehrere Spannungsumrichter an einen gemeinsamen Schaltregler angeschlossen werden. Als Spannungsumrichter können Umrichter Verwendung finden, die in üblicher Weise aufgebaut sind. Bei besonders grossen Anforderungen an die Konstanz der Verbraucherspannung kann der Spannungsumrichter ein geregelter Umrichter sein.

Der dem Schaltregler nachgeschaltete Umrichter wird hier aus einer Quelle gespeist, die eine nahezu konstante Spannung hat. In Verbindung mit den weiteren erfindungsgemässen Massnahmen ergibt sich eine gute Dynamik; in vorteilhafter Weise ist hierzu kein Verlustregler erforderlich. Ausserdem ergeben sich in vorteilhafter Weise durch rasche Anpassung der aufgenommenen Leistung am Eingang an die jeweilige Belastung ein hoher Wirkungsgrad im gesamten Arbeitsbereich und damit bis zum ausgangsseitigen Leerlauf nur geringe Verlustleistungen. Die eingangsseitige Anpassung der Leistung ermöglicht es auch, den eingeprägten Fernspeisestrom gegebenenfalls zu verändern, um die Strecke bestimmten Betriebsbedingungen besser anzupassen.

Da zwischen dem Eingang des Schaltreglers und dem Schaltglied in einem Längszweig eine Drossel und in einem auf der dem Schaltglied abgewandten Seite der Drossel liegenden Querzweig ein Kondensator angeordnet ist, lassen sich die Spannungssprünge am Eingang des Schaltreglers so weit verkleinern, dass eine grössere Zahl von Verbrauchern an ein und dieselbe Stromquelle angeschlossen werden kann, ohne dass sich das Tiefpassverhalten der Fernspeiseleitung nachteilig auf die Funktion der Schaltregler auswirkt.

Das Schaltglied kann mit Steuerimpulsen konstanter oder variabler Frequenz gesteuert werden. Bei der Steuerung mit variabler Frequenz können Steuerimpulse konstanter Dauer Verwendung finden.

Als besonders vorteilhaft hat sich eine Ausbildung der Schaltungsanordnung erwiesen, bei der das Schaltglied durch mit Hilfe der Steuerschaltung dauermodulierte Taktimpulse steuerbar ist.

In vorteilhafter Weise lässt sich eine relativ grosse Konstanz der Verbraucherspannung mit geringem Aufwand bereits dadurch erzielen, dass der Spannungsumrichter ein ungeregelter Durchflussumrichter mit Trennübertrager, insbesondere mit fest einstellbarem Tastgrad ist. Mit Hilfe einer insbesondere stufenweise Tastgradeinstellung lässt sich der Spannungsumrichter dabei leicht auf verschiedene Verbraucherleistungen einstellen.

Der Spannungsumrichter kann eine eigene Taktversorgung aufweisen. Ein besonders geringer Aufwand ergibt sich in Verbindung mit einem taktgesteuerten Schaltregler dadurch, dass der Schaltregler und der Spannungsumrichter durch einen gemeinsamen Taktgeber steuerbar sind.

Der Istwert für die Steuerschaltung des Schaltreglers kann die Verbraucherspannung selbst oder eine andere Spannung sein, die geeignet ist, als Mass für die Verbraucherspannung zu dienen. Besonders vorteilhaft kann es dabei sein, als von der Steuerschaltung ausgewerteten Istwert die Ausgangsspannung des Schaltreglers selbst zu verwenden.

Der Regler kann ein für Umrichter bestimmter Baustein sein, wobei das Schaltglied durch den Baustein, bezogen auf Umrichteranwendungen, komplementär angesteuert wird. In vorteilhafter Weise können so handelsübliche integrierte Schaltungen Verwendung finden, wobei einfache Massnahmen genügen, den Schaltkreis an die von den üblichen Anwendungen abweichenden Gegebenheiten anzupassen.

Eine Steuerung des Schaltgliedes derart, dass das Schaltglied durch mit Hilfe der Steuerschaltung gebildete Steuerimpulse veränderbarer Folgefrequenz steuerbar ist, kann zusätzlich zu oder an Stelle von einer Steuerung mit dauermodulierten Impulsen erfolgen.

Die Erfindung wird anhand der in den Figuren dargestellten Ausführungsbeispiele näher erläutert. Es zeigen:

Fig. 1 eine Fernspeiseeinrichtung, bei der den Verbrauchern jeweils ein Schaltregler vorgeschaltet ist,

Fig. 2 einen Schaltregler, der einen eingeprägten Gleichstrom in eine Konstantspannung umwandelt und

Fig. 3 weitere Einzelheiten eines Schaltreglers nach Fig. 2.

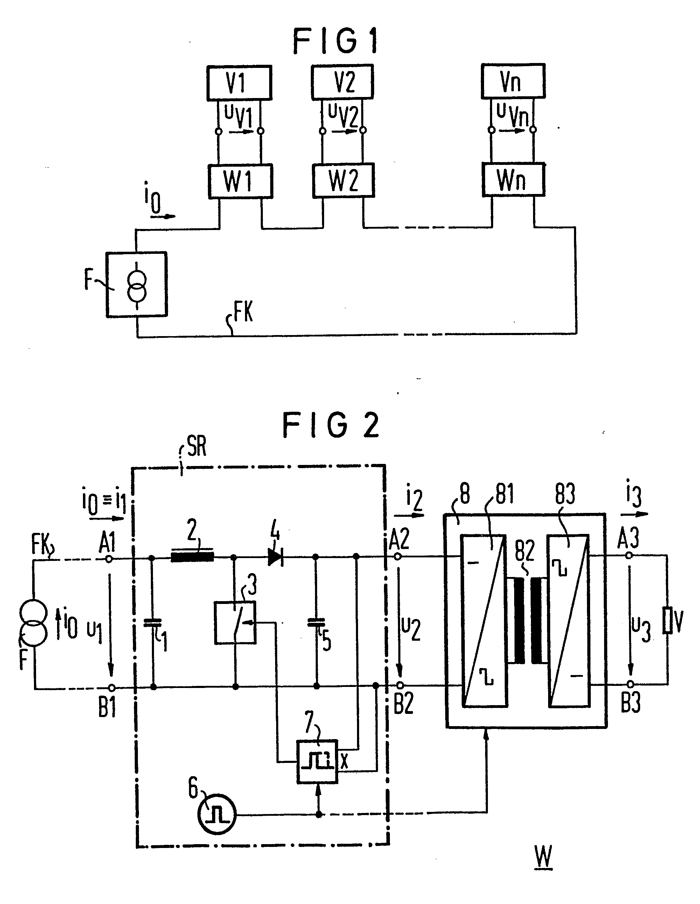

In Fig. 1 ist eine ferngespeiste Anlage als Blockschaltbild dargestellt. Das fernspeisende Gerät F gibt einen konstanten Gleichstrom $i_o$ ab. Die fernzuspeisenden Verbraucher V1, V2,...Vn werden an ihrem Speiseeingang am besten mit konstanter Spannung betrieben. Die vorgeschalteten Schaltregler W1, W2,...Wn wandeln den an ihrem Eingang eingeprägten Strom $i_o$ in eine konstante Spannung $U_{V1}$, $U_{V2}$,...$U_{Vn}$ für den Verbraucher um.

Fig. 2 zeigt einen Teil der in Fig. 1 dargestellten Fernspeiseeinrichtung, wobei der Aufbau des Schaltreglers näher gezeigt ist.

Bei dem Schaltregler SR ist parallel zum Eingang der Kondensator 1 und parallel zum Ausgang der Kondensator 5 angeordnet. Die Kondensatoren 1 und 5 und das Schaltglied 3 sind einpolig miteinander verbunden. Auf der diesem Verbindungspunkt abgewandten Seite sind die Kondensatoren 1 und 5 über eine Serienschaltung aus der Drossel 2 und der Diode 4 verbunden, wobei die Drossel 2 am Eingang liegt und die Diode 4 so gepolt ist, dass sie für Ströme vom Eingang zum Ausgang durchlässig ist. Das Schaltglied 3 ist in einem Querzweig des Schaltreglers zwischen dem Verbindungspunkt von Drossel 2 und Diode 4 einerseits und dem Verbindungspunkt der Kondensatoren 1 und 5 andererseits angeordnet.

Der Schaltregler SR bildet den eigentlichen Stromspannungsumformer. Dieser besteht aus der Drossel 2 und dem Halbleiterschalter 3, die in Serie zueinander unmittelbar im ferngespeisten Leitungszug liegen; parallel dazu ist der Kondensator 1, der klein ist im Vergleich zu dem am Ausgang des Schaltreglers liegenden Kondensator 5, angeordnet.

Der Halbleiterschalter 3 wird von einem impulsbreitenmodulierten Signal in der Weise geöffnet und geschlossen, dass gerade so viel von der in der Drossel 2 und dem Eingangskondensator 1 gespeicherten Energie über die Diode 4 dem Ausgangskondensator 5 zugeleitet wird, dass an diesem die Spannung konstant bleibt, solange ein bestimmter maximaler Laststrom, der an dieser Stelle praktisch gleich dem Fernspeisestrom $i_o$ ist, nicht überschritten wird. Die Steuerung des pulsbreitenmodulierten Signals erfolgt in gleicher Weise wie bei bekannten Drosselwandlern.

Der dem Schaltregler nachgeschaltete Gleichspannungsumrichter 81, 83 kann wegen der konstanten Spannung an seinem Eingang in einfacher Weise nach einem der bekannten Prinzipien ausgeführt werden. Es ist vorzugsweise ein ungeregelter Durchflussumrichter mit Trennübertrager 82. Seine Taktfrequenz wird vorteilhaft vom gleichen Oszillator bezogen, die auch den Schaltregler ansteuert.

Das Gerät kann auch schnellen Lastschwankungen folgen, da der Eingangskondensator verhältnismässig klein ist und daher rasch auf die dem geänderten Lastfall entsprechende neue Eingangsspannung umgeladen wird. Der im Vergleich dazu vom Prinzip her träge Spannungsumrichter ist von der Änderung in seiner Betriebsweise nicht betroffen.

Das Fernspeisegerät F gibt den konstanten Strom $i_o$ ab. An den Klemmen A3 und B3 ist das fernzuspeisende Gerät anzuschliessen, das hier als Verbraucherwiderstand V dargestellt ist. Zwischen den Klemmen A1, B1 und A3, B3 befindet sich das vorgeschaltete Gerät, das in der Folge als Konstantstrom-Konstantspannungs-Umrichter bezeichnet wird. Da es aus praktisch verlustlosen Elementen besteht, weist es einen hohen Wirkungsgrad auf. Das Gerät wird daher in der folgenden Beschreibung der Einfachheit halber als verlustlos angesehen.

Der Schaltregler SR zwischen den Klemmen A1, B1 und A2, B2 wandelt den konstanten Strom $i_1$ in eine konstante Spannung $U_2$ um. Der Spannungswandler 8 wandelt diese Spannung $U_2$ in die gewünschte Spannung $U_3$ um. Der Spannungswandler 8 ermöglicht auch die im allgemeinen gewünschte Potentialtrennung.

Wird der angeschlossene Verbraucher V bei seiner Nennspannung $U_3$ betrieben, so nimmt er den Strom $i_3$ auf. Bei Verlustlosigkeit ist die aufgenommene Leistung $u_1 \cdot i_1$ gleich der abgegebenen Leistung $u_3 \cdot i_3$. Da aber bei Stromeinprägung der Strom $i_1$ gleich dem Ausgangsstrom $i_o$ des Fernspeisegerätes F ist, ist am Eingang A1, B1 die Spannung

$$u_1 = \frac{i_3 u_3}{i_o} \qquad (1)$$

nötig. Das aus dem Schaltregler und dem Spannungsumrichter bestehende Speisegerät wird für denjenigen Strom $i_{3max}$ bemessen, den der Verbraucher V im ungestörten Betrieb maximal aufnimmt, wobei sehr kurze Lastspitzen unberücksichtigt bleiben können, da sie durch die aus schaltungstechnischen Gründen immer vorhandenen Energiespeicher, insbesondere Kondensatoren, gespeist werden. Wegen Gleichung (1) gilt auch

$$u_{1max} = \frac{i_{3max} u_3}{i_o} \qquad (2)$$

Der Schaltregler SR ist zweckmässigerweise so beschaffen, dass sich an den Klemmen A2, B2 eine Spannung

$$u_2 \gtrapprox u_{1max} \qquad (3)$$

einstellt. Insbesondere wird der Mittelwert der Spannung $u_2$ derart geringfügig grösser als die Spannung $u_{1max}$ gewählt, dass der Schaltregler an dieser Grenze des Regelbereiches gerade noch im Schaltbetrieb arbeitet.

Der Spannungsumrichter 8 hat nur mehr eine konstante Spannung $u_2$ in die ebenfalls konstante Spannung $u_3$ umzuwandeln. Hierfür sind Gleichspannungswandler nach allen bekannten Prinzipien geeignet.

Um aus dem konstanten Strom $i_o$ eine konstante Spannung $u_2$ zu erzeugen, genügt es, über die Diode 4 den Kondensator 5 aufzuladen und bei Erreichen der Spannung $u_2$ über den Regler 7 den Schalter 3 so anzusteuern, dass die Spannung $u_2$ durch stossweises Nachladen in vorgegebenen engen Grenzen bleibt. Das kann z.B. in der Weise geschehen, dass der Schalter von einem Impulszug angesteuert wird, der vom Oszillator 6 abgegeben wird und dessen Impulse von einem Regler 7 in der Breite gesteuert werden. Dieses Verfahren führt allerdings am Eingang A1, B1 zu Spannungssprüngen, wobei die Spannung $u_1$ zwischen den Werten $u_1 = 0$ und $u_1 = u_2$ springt.

Der Kondensator 1 und die Drossel 2 ermöglichen es, mehrere Geräte fernzuspeisen, ohne dass sich der Tiefpasscharakter der Fernspeiseleitung nachteilig auswirkt. Zugleich werden unzulässige höherfrequente Störungen sicher vermieden.

Die Frequenz des Oszillators ist zweckmässigerweise ausreichend hoch, insbesondere etwa 30 KHz, um am Kondensator 5 die durch das periodische Nachladen hervorgerufenen Spannungsschwankungen klein zu halten.

Dies ist in vorteilhafter Weise ohne weiteres möglich, da unzulässige höherfrequente Störungen durch den Kondensator 1 und die Drossel 2 vermieden werden. Die Kapazität des Kondensators 1 ist insbesondere derart gross genug bemessen, dass sie von Toleranzen der Streckenkapazität unabhängig ist und die Schaltlücken des Schalters 3 überbrückt werden. Er ist andererseits klein genug, dass er vom Strom $i_o$ in genügend kurzer Zeit von der minimal auftretenden Spannung $u_{1min}$ auf die maximale Spannung $u_{1max}$ aufgeladen wird. Die Drossel 2 hält den Stromfluss in den Schaltlücken aufrecht. Die Drossel 2 und der Kondensator 1 können als Siebglied aufgefasst werden, das die am Schalter 3 auftretenden Spannungsstösse abfängt.

Der Schaltregler SR ähnelt formal dem bekannten Aufstock-Sperrumrichter, bei dem über eine stossweise geladene Speicherdrossel eine niedrigere Spannung in eine höhere umgewandelt wird. Der Regler 7 arbeitet jedoch in Bezug auf den Regler eines derartigen Aufstock-Umrichters gerade in einem umgekehrten Sinne. Werden nur kleine Ströme $i_3$ und damit $i_2$ benötigt, so bleibt der Schalter 3 den grössten Teil der Schaltperiode geschlossen, d.h. der Tastgrad ist gross, und es stellt sich wie gewünscht eine kleine Eingangsspannung $u_1$ ein. Beim Aufstock-Sperrumrichter, der mit einer konstanten Spannung gespeist wird, wird dagegen in diesem Fall der Schalter nur kurzzeitig geschlossen.

Bei grösseren Strömen $i_3$ wird der Tastgrad des Schalters 3 zunehmend kleiner, bis bei dem Strom $i_3 = i_{3max}$ der Schalter 3 die ganze Zeit geöffnet bleiben kann. Es fliesst dann der Strom $i_{2max} = i_o$ direkt über die Drossel 2 und die Diode 4 in den Kondensator 5, wo er sofort wieder entnommen wird.

Beim Einschalten ist zunächst der Schalter 3 geöffnet. Ohne weitere Massnahmen bleibt er das auch, bis die Spannung $u_2$ ihren Sollwert $u_{1max}$ erreicht hat. Dann beginnt der Regler zu arbeiten und die Spannung $u_1$ sinkt sehr rasch dem Lastfall entsprechend ab. Vorteilhaft ist dabei, dass der als Energiespeicher dienende Kondensator 5 und die nachfolgenden Speicher ohne weitere Massnahmen mit maximalem Strom geladen werden. Die Drossel 2 und der Kondensator 1 sollen nur die für die Schaltlücken benötigte Energie mit Sicherheit bereitstellen.

Bei plötzlich sehr starker Entlastung wird die Energie von dem dann zu stark aufgeladenen Kondensator 1 an den Kondensator 5 abgegeben. Die Spannung $u_2$ steigt dabei an und der Regler 7 schaltet im Extremfall den Schalter 3 über einige Zeit dauernd durch. Der Kondensator 5 entlädt sich über die neue Last relativ schnell auf den Nennwert der Spannung $u_2$, da solange keine Ladung nachgeliefert wird, bis diese Spannung erreicht wird und der Regler 7 wieder den Schalter betätigt.

Eine plötzlich ansteigende Stromaufnahme führt ebenfalls zu einem Blockieren des Schalters, der jetzt ständig offen bleibt. Die Eingangsspannung $u_1$ steigt rasch an und der Kondensator 5 wird mit maximalem Strom nachgeladen, bis sich ein neuer stabiler Zustand einstellt.

Eine Überlast bis zum Kurzschluss am Ausgang, der bei idealem Verhalten des Spannungsumrichters 8 an den Klemmen A2, B2 ebenfalls als Überlast wirkt, führt zu einem dauernden Absinken der Spannung $u_2$ auf die Spannung $u_2'$ unter deren Nennwert. Der Schalter 3 bleibt ständig geöffnet und der Kondensator 5 wird direkt nachgeladen. In diesem Fall, der ein Fehlerfall ist, ist dann $u_1' = u_2'$. Da sowohl die Drossel 2 als auch die Diode 4 für den Strom $i_o$ dimensioniert sein müssen, tritt keine Überlastung der Bauelemente ein.

Nach Beseitigung des Fehlers läuft die Spannung $u_2$ wie beim Einschalten mit minimaler Verzögerung hoch.

Der Gleichspannungsumrichter 8 ist für die Funktion des Gesamtgerätes nur dann erforderlich, wenn eine Potentialtrennung gefordert wird. Wird keine Potentialtrennung gefordert, z.B. häufig bei drahtgebundenen Weitverkehrssystemen, und kann der Fernspeisestrom entsprechend demjenigen Gerät mit der maximalen Stromaufnahme dimensioniert werden, so wird nur der Schaltregler SR benötigt. Der Gleichspannungsumrichter 8 bietet allerdings auch in diesem Fall bei geringem Mehraufwand und gutem Wirkungsgrad eine weitgehende Freiheit in der Bemessung des Gerätes.

Ein weiterer Vorteil besteht darin, dass das Gesamtsystem nicht mehr im Hinblick auf eine denkbare ungünstige Summierung von extremen Lastfällen hin bemessen zu werden braucht, sondern nur mit Rücksicht auf den ungünstigsten . tatsächlich auftretenden Fall, da die Schaltregler immer nur die gerade benötigte Leistung aufnehmen.

Bei Einsatz eines Gleichspannungsumrichters 8 – auch ohne Potentialtrennung – sind $i_o$ und $u_3$

nur über Gleichung 2 verknüpft. Damit ist es sogar möglich, schon fertige Fernspeisesysteme mit höherem als dem ursprünglichen Strom $i_0$ zu betreiben, um z.B. bei langen Strecken auf niedrigere Fernspeisespannungen zu kommen. Das Fernspeisesystem passt sich automatisch an.

Der Gleichspannungsumrichter 8 arbeitet mit konstanter Eingangsspannung $u_2$. Er wird vorzugsweise als Durchflussumrichter ausgeführt und braucht nicht geregelt zu werden. Wird er mit konstantem Tastgrad betrieben, so braucht er auch keine statische Strombegrenzung, da das Einprägen des Stromes am Eingang diese Funktion von sich aus gewährleistet. Eine dynamische Strombegrenzung gegen Stromspitzen im Fehlerfall kann trotzdem sinnvoll sein.

Ferner ist es möglich, den Regler 7 statt durch die Spannung $u_2$ mittels der Spannung $u_3$ zu steuern; die Gesamtordnung ist aber regelungstechnisch schwer zu beherrschen und für eine statische Überlastbegrenzung sind dann ggf. besondere Massnahmen erforderlich.

Es ist allerdings zweckmässig, den Tastgrad für unterschiedliche Lastfälle einstellbar zu machen, insbesondere um eine einheitliche Ausführung des Schaltreglers SR zu ermöglichen.

Für den Regler 7 werden zweckmässigerweise die gleichen integrierten Schaltungen verwendet, die sich auch für Umrichter eignen. Der Schalter 3 wird im Vergleich dazu komplementär betrieben. Zu diesem Zweck kann eine Invertierung des Steuersignals, die Verwendung eines inversen Ausganges der Steuerschaltung oder die Verwendung eines Schaltgliedes vom komplementären Typ oder dergl. zweckmässig sein.

Von dem in einem derartigen Regler 7 vorhandenen Taktoszillator 6 für die Schaltfrequenz kann auch der Gleichspannungsumrichter 8 angesteuert werden. Der Gesamtaufwand ist dadurch besonders niedrig.

Der Regler 7 und der Taktgeber 6 können aus einer Hilfsspannungsquelle versorgt werden. Zweckmässigerweise werden sie an der Spannung $u_2$ oder einer davon abgeleiteten Spannung betrieben. Es ist dann ohne Bedeutung, wenn sich nur eine kleine Spannung $u_1$ am Eingang einstellt. Es muss in diesem Fall allerdings sichergestellt sein, dass beim Einschalten, bei dem auch die Spannung $u_2$ zunächst noch niedrig ist, der Schalter 3 solange geöffnet bleibt, bis die Versorgungsspannung der den Schalter 3 ansteuernden Schaltung einen ausreichend hohen Wert erreicht, um ein einwandfreies Arbeiten von Regler 7 und Taktgeber 6 zu gewährleisten. Erforderlichenfalls wird eine Hilfsschaltung vorgesehen, die den Schalter 3 solange geöffnet hält, bis die erforderliche Spannungsversorgung gewährleistet ist. Eine vorteilhafte Lösung besteht darin, das Schaltglied derart zu beschalten, dass es sich ohne weitere Massnahmen im gesperrten Zustand befindet und mit Hilfe einer weiteren Schaltung dafür zu sorgen, dass die Steuerschaltung nur bei ausreichend hohen Versorgungsspannungen in die Lage versetzt wird, den Schalter 3 leitend zu steuern. Die erstgenannte Schaltung besteht z.B. bei einem Leistungs-MOS-Transistor als Schaltglied aus einem zwischen Gate und Source liegenden Widerstand. Die zweite Schaltung kann insbesondere ein dem Speiseeingang der Ansteuerschaltung vorgeschalteter Schmitt-Trigger sein, der im einen Zustand die Spannung 0 und im anderen Zustand eine ausreichende Versorgungsspannung liefert.

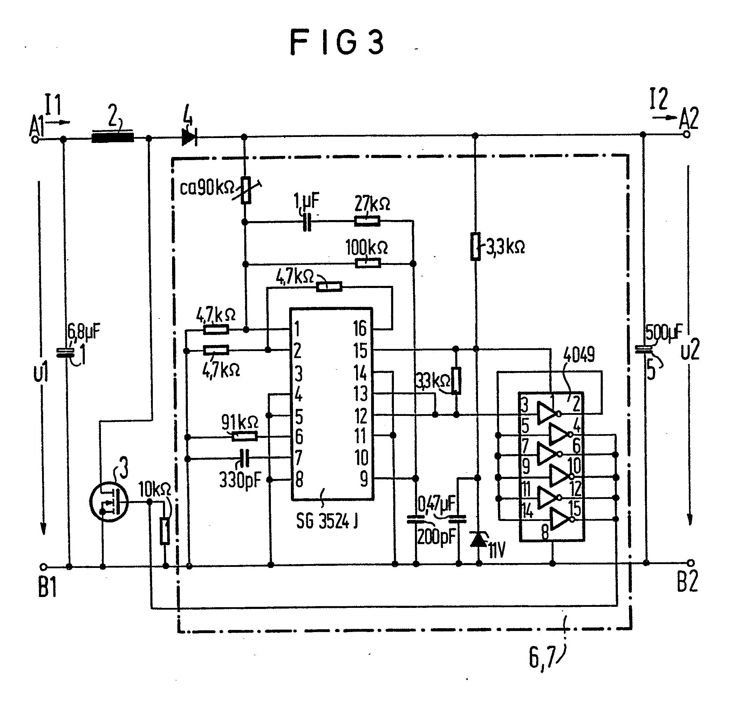

Fig. 3 zeigt einen Konstantstrom-Konstantspannungs-Umrichter ohne Potentialtrennung und entspricht daher dem Schaltregler SR aus Fig. 2. Als Steuerschaltung dient der integrierte Schaltkreis SG3524J (Texas Instruments). Die in der Figur angegebene Bemessung ist für eine Spannung am Verbraucher U2 = 50 V ausgelegt; der maximale Strom darf i2 = 180 mA sein. Am Eingang wird ein Strom $i_0 = i_1 = 200$ mA eingeprägt. Bei 180 mA ist die Eingangsspannung U1 = 50 V, bei Leerlauf am Ausgang stellt sich am Eingang eine Spannung $u_1 = 5$ V ein.

Die Kapazität des Kondensators 1 beträgt 6,8 µF, die Kapazität des Kondensators 5 beträgt 500 µF. Die Drossel 2 hat eine Induktivität der Grösse 3 mH.

Der Oszillator und der pulsbreitenmodulierende Regler sind durch die integrierte Schaltung SG3524J mit entsprechender Beschaltung realisiert. Die Oszillatorfrequenz beträgt 33 kHz. Der Regelverstärker (Pin 1,2,9) ist so beschaltet, dass die Gesamtanordnung auch bei starken Lastschwankungen stabil ist, wobei auch mehrere solche Geräte eingangsseitig in Serie in einem gemeinsamen Fernspeisekreis betrieben werden können, ohne dass es zu Schwingungen im Gesamtsystem kommt.

Die Steuerschaltung verfügt auch über die nötige Referenzspannung. Ihre Betriebsspannung bezieht sie vom Ausgang A2-B2, die wegen ihrer Konstanz dazu besonders geeignet ist. Die parallelgeschalteten Endstufentransistoren der integrierten Schaltung steuern einen Sechsfach-Inverter in CMOS-Technik vom Typ 4049 an, der schliesslich seinerseits den SIPMOS-Transistor BSS93 ansteuert. Dieser Transistor ist der in Fig. 2 als 3 bezeichnete Schalter.

Plötzliche Lastsprünge – Belastung und Entlastung – werden innerhalb von etwa 80 ms völlig ausgeregelt, wobei das erwähnte Blockieren des Schalters 3 nach weniger als 20 ms erfolgt. Die restliche Zeit ist dann durch die Zeitkonstante von Kondensator 5 zu Lastwiderstand V bestimmt.

Die Schaltung ist kurzschlussfest und kann mit jedem beliebigen Lastwiderstand eingeschaltet werden.

### Patentansprüche

1. Schaltungsanordnung zur Speisung von wenigstens einem Verbraucher (V) mit einer Gleichspannung über jeweils ein Speisegerät, das eingangsseitig in einem einen eingeprägten Strom führenden Speisekreis (FK) liegt; jedes Speisegerät enthält einen Schaltregler (SR) mit einem steuerbaren Schaltglied (3), das über eine Längsdrossel (2) und einen Parallel-Kondensator (1) parallel zum Eingang des Speisegerätes liegt; parallel zum Schaltglied (3) liegt die Reihenschaltung einer Diode (4), die bei leitendem Schaltglied gesperrt ist, und eines Kondensators (5), an dessen Klemmen ein Gleichspannungsumrichter (8) angeschlossen ist; das Schaltglied (3) ist mittels einer Steuerschaltung (6, 7) in Abhängigkeit von der wenigstens näherungsweise konstant zu haltenden Gleichspannung am Kondensator (5) oder am Ausgang des Spannungsumrichters (8) in der Weise steuerbar, dass im Regelbereich des Schaltreglers (SR) die relative Einschaltdauer bei grösseren Ausgangsströmen zunehmend kleiner wird; die Kapazität des am Eingang des Schaltreglers (SR) liegenden Kondensators (1) ist mindestens um den Faktor 10 kleiner bemessen als die Kapazität des am Ausgang des Schaltreglers (SR) liegenden Kondensators (5).

2. Schaltungsanordnung nach Anspruch 1, dadurch gekennzeichnet, dass das Schaltglied (3) durch mit Hilfe der Steuerschaltung (6, 7) dauermodulierte Taktimpulse steuerbar ist.

3. Schaltungsanordnung nach Anspruch 1 oder 2, dadurch gekennzeichnet, dass der Spannungsumrichter (8) ein ungeregelter Durchflussumrichter mit Trennübertrager (82), insbesondere mit fest einstellbarem Tastgrad ist.

4. Schaltungsanordnung nach einem der Ansprüche 1 bis 3, dadurch gekennzeichnet, dass der Schaltregler (SR) und der Spannungsumrichter (8) durch einen gemeinsamen Taktgeber (6) steuerbar sind.

5. Schaltungsanordnung nach einem der Ansprüche 1 bis 4, dadurch gekennzeichnet, dass der von der Steuerschaltung (6, 7) ausgewertete Istwert die Ausgangsspannung (u2) des Schaltreglers (SR) ist.

6. Schaltungsanordnung nach einem der vorhergehenden Ansprüche, dadurch gekennzeichnet, dass der Regler (7) ein für Umrichter bestimmter Baustein ist und dass das Schaltglied (3) durch den Baustein bezogen auf Umrichteranwendungen komplementär angesteuert wird.

7. Schaltungsanordnung nach einem der vorhergehenden Ansprüche, dadurch gekennzeichnet, dass das Schaltglied (3) durch mit Hilfe der Steuerschaltung gebildete Steuerimpulse veränderbarer Folgefrequenz steuerbar ist.

**Claims**

1. A circuit arrangement for supplying at least one load (V) with a d.c. voltage via a respective supply device connected at its input to a supply circuit (FK) which carries an impressed current; each supply device containing a switching regulator (SR) comprising a controllable switching element (3) which is connected in parallel with the input of the supply device via a series choke (2) and a parallel capacitor (1); the switching element (3) is connected in parallel to the series combination of a diode (4) which is blocked when the switching element is conductive, and a capacitor (5) whose terminals are connected to a d.c.

voltage converter (8); the switching element (3) being controlled by a control circuit (6, 7) in dependence upon the d.c. voltage connected to the capacitor (5) or to the output of the voltage converter (8) and which is to be maintained at least substantially constant, such that in the control range of the switching regulator (SR) the relative switch-on time becomes increasingly shorter at greater output currents; and the capacitance of the capacitor (1) connected to the input of the switching regulator (SR) is contrived to be a factor of at least ten smaller than the capacitance of the capacitor (5) connected to the output of the switching regulator (SR).

2. A circuit arrangement as claimed in Claim 1, characterised in that the switching element (3) is controlled by clock pulses duration-modulated by the control circuit (6, 7).

3. A circuit arrangement as claimed in Claim 1 or 2, characterised in that the voltage converter (8) is an unregulated conducting d.c./d.c. converter comprising an isolating transformer (82), in particular whose pulse duty factor can be adjustably fixed.

4. A circuit arrangement as claimed in one of Claims 1 to 3, characterised in that the switching regulator (SR) and the voltage converter (8) are controlled by a common clock pulse generator (6).

5. A circuit arrangement as claimed in one of Claims 1 to 4, characterised in that the actual value analysed by the control circuit (6, 7) is the output voltage (u2) of the switching regulator (SR).

6. A circuit arrangement as claimed in one of the preceding Claims, characterised in that the regulator (7) is a module intended for converters and the switching element (3) is driven by the module so as to be complementary with converter applications.

7. A circuit arrangement as claimed in one of the preceding Claims, characterised in that the switching element (3) can be controlled by control pulses of variable repetition frequency which are formed by means of the control circuit.

**Revendications**

1. Montage pour l'alimentation d'au moins un récepteur de courant (V) avec une tension continue à travers un appareil d'alimentation pour chaque récepteur, appareil qui est branché par son entrée dans un circuit d'alimentation (FK) dans lequel circule un courant imposé, chaque appareil d'alimentation contenant un régulateur à commutation (SR) avec un élément de commutation (3) commandé qui est monté en parallèle avec l'entré de l'appareil d'alimentation à travers une self-inductance série (2) et un condensateur parallèle (1), avec prévision, en parallèle avec l'élément de commutation (3), du montage en série d'une diode (4) qui est bloquée lorsque l'élément de commutation est conducteur, et d'un condensateur (5) aux bornes duquel est raccordé un convertisseur de tension continue (8), l'élément de commutation (3) pouvant être commandé au moyen d'un circuit de commande (6, 7), en fonction de la tension continue sur le condensateur (5), ou à la sortie du convertisseur de tension (8), tension qui est à maintenir au moins approximativement constante, de manière que la durée relative d'enclenchement, dans le domaine de réglage du régulateur à commutation (SR), devienne de plus en plus petite à mesure que les courants de sortie sont plus grands, et la capacité du condensateur (1) à l'entrée du régulateur à commutation (SR) étant plus petite du facteur 10 au moins que la capacité du condensateur (5) à la sortie du régulateur à commutation (SR).

2. Montage selon la revendication 1, caractérisé en ce que l'élément de commutation (3) est commandé par des impulsions de rythme modulées en durée à l'aide du circuit de commande (6, 7).

3. Montage selon la revendication 1 ou 2, caractérisé en ce que le convertisseur de tension (8) est un convertisseur de passage, non réglé, avec un transformateur de séparation (82), ayant en particulier un facteur d'utilisation des impulsions susceptible d'être ajusté à des valeurs fixes.

4. Montage selon une des revendications 1 à 3, caractérisé en ce que le régulateur à commutation (SR) et le convertisseur de tension (8) sont commandés par un générateur de rythme commun (6).

5. Montage selon une des revendications 1 à 4, caractérisé en ce que la valeur réelle exploitée par le circuit de commande (6, 7) est la tension de sortie (u2) du régulateur à commutation (SR).

6. Montage selon une des revendications précédentes, caractérisé en ce que le régulateur (7) est un composant destiné à des convertisseurs et que l'élément de commutation (3) est commandé de façon complémentaire par rapport à des applications à des convertisseurs.

7. Montage selon une des revendications précédentes, caractérisé en ce que l'élément de commutation (3) est commandé par des impulsions de commande à fréquence de répétition variable, produites à l'aide du circuit de commande.

FIG 1

FIG 2

# F I G 3